# EUROPÄISCHE PATENTSCHRIFT

(11) **EP 1 291 604 B1**
(45) Veröffentlichungstag und Bekanntmachung des Hinweises auf die Patenterteilung: **30.11.2005**
(21) Anmeldenummer: 02017158.3
(22) Anmeldetag: 31.07.2002
(51) Int. Cl.: F41H 7/02, B60D 1/00, B60R 11/06

(54) **Lagerung einer Abschleppvorrichtung für ein gepanzertes Transportfahrezeug**
Storage of a towing device for an armoured transport vehicle
Stockage d'un dispositif de remorquage pour un véhicule de transport blindé

(30) Priorität: 10.09.2001 DE 10144370
(43) Veröffentlichungstag der Anmeldung: 12.03.2003
(73) Patentinhaber: Rheinmetall Landsysteme GmbH, 24107 Kiel (DE)
(72) Erfinder: Schrepel, Tino, 24107 Kiel (DE); Hass, Frank, 24235 Wendtorf (DE); Boeckmann, Frank, 22457 Hamburg (DE)
(74) Vertreter: Dietrich, Barbara

(56) Entgegenhaltungen:
- EP-A- 0 767 079
- DE-A- 2 320 474
- DE-A- 19 839 498
- US-A- 2 444 944
- US-A- 5 683 061
- SCHAEFER K-J: "GEPANZERTES TRANSPORT-KRAFTFAHRZEUG DAS TECHNISCH-WIRTSCHAFTLICHE SYSTEMELEMENT" WEHRTECHNIK, VERLAG WEHR UND WISSEN GMBH. BONN, DE, Bd. 27, Nr. 5, 1. Mai 1995 (1995-05-01), Seiten 52-54,56-57, XP000509209 ISSN: 0043-2172
- PATENT ABSTRACTS OF JAPAN vol. 1997, no. 03, 31. März 1997 (1997-03-31) & JP 08 295295 A (MITSUBISHI HEAVY IND LTD), 12. November 1996 (1996-11-12)

## Beschreibung

Die Erfindung bezieht sich auf eine Vorrichtung in einem gepanzerten Fahrzeug, das sich aus den üblichen Teilen wie Antriebsmotor, Getrieben, Radsätzen oder Kettenlaufwerk, einem Besatzungsraum und einem Gehäuse, das alle Ein- und Anbauten aufnimmt, zusammensetzt. Bei einem Schützenkampffahrzeug werden zum Beispiel mit dem Fahrzeug mehrere Soldaten transportiert, die schnell über eine Heckklappe aussteigen oder aufsitzen können. Bei einem anderen Fahrzeugtyp, dem gepanzerten Transport-Kraftfahrzeug, abgekürzt GTK, wird das Fahrzeug in Module eingeteilt und ein sogenanntes Missionsmodul austauschbar auf dem Chassis oder Fahrmodul untergebracht. Verschiedene Bewaffnungen und Ausrüstungen können dann als Modul austauschbar auf dem Fahrzeug wechselweise mitgeführt werden. Bei einer Fahrzeugvariante wird ein Führungsfahrzeug dargestellt, bei dem mehrere Soldaten im Fahrzeug an Karten- und Datengeräten tätig werden.

Nach dem Stand der Technik sind verschiedene Vorschläge zum Aufbau von Fahrzeugen und zu gepanzerten Transportfahrzeugen gemacht worden. Dabei wird die Abschleppstange üblicherweise aussen am Fahrzeug in entsprechenden Halterungen mitgeführt.

In der DE 4219688 wird ein luftverlastbares Panzerfahrzeug aus einem Fahrgestell und darauf angeordneten mehreren Gehäuseteilen aufgebaut, wobei ein Gehäuseteil aus einem fahrgestellfesten Unterteil und einem beweglichen Oberteil besteht, welches bei Lufttransport vertikal eingeschoben werden kann zur Verminderung des Fahrzeugvolumens.

In der DE 19502036 wird ein Kettenfahrzeug schnell und kostensparend an unterschiedliche Einsatzforderungen angepasst, in dem der Wannenaufbau modular gestaltet und aus mindestens zwei Modulen besteht.

In der DE 19619865 wird ein umrüstbares militärisches Radfahrzeug mit trennbaren Modulen dargestellt, das aus einem Grundgehäuse zur Aufnahme der Fahrzeugkomponenten besteht und von einem diesel-mechanischen zu einem diesel-elektrischen Antrieb umgebaut werden kann bei Vorteilen für die Bauhöhe und Ausgestaltung des Fahrzeugs.

Aus der DE 19927656A1 ist ein gepanzertes Transportkraftfahrzeug bekannt, welches mit einem unbemannten Schartenturm einschliesslich Lafette und Bordmaschinenwaffe als Bewaffnung ausgerüstet ist, der von der Besatzung aus dem Fahrzeuginneren fernbedient wird.

Bei einem Kampffahrzeug für eine hochbewegliche Truppe, bei der die schnelle Verlegung von einem Einsatzort zu einem anderen ein besonderes Missionskennzeichen ist, müssen auch Fahrzeugausfälle schnell beseitigt, das heisst, abgeschleppt und geborgen werden.

Da das Grundfahrzeug als ein Familienfahrzeug entwickelt ist, bei dem aus plausiblen Gründen geometrische Größe und hohes Gewicht ein grundsätzliches Negativkriterium bedeuten, ist die Darstellung von Spezialfahrzeugen auf Basis des Familienfahrzeugs ein besonderes Innenraum- und Platzproblem bei der Auslegung des spezifischen Fahrzeugs. Deshalb ist es wichtig auf engstem Raum die notwendigen Geräte und Einrichtungen in einem gegebenen Fahrzeug einzubauen.

Da die Radarsignatur optimal gestaltet werden muß, um die Entdeckbarkeit eines Fahrzeugs gering zu halten, ist es ungünstig, Geräte und Ausrüstungsteile außen am Fahrzeug zu befestigen und mitzuführen, und sie werden deshalb soweit möglich im Innenraum untergebracht. Dies gilt auch für eine Abschleppeinrichtung.

Bekannte Lösungen weisen zum Beispiel den Nachteil auf, dass eine Vielzahl von Ausrüstungsgegenstanden außen am Fahrzeug mitgeführt werden.

Aufgabe der Erfindung ist es, eine Abschleppvorrichtung im Innenraum eines Fahrzeuggehäuses mitzuführen und einsatzbereit zu halten, wobei die Bedingungen gelten, dass auf jedem Fahrzeug eine Hälfte der Abschleppvorrichtung mitgeführt wird und zwei Hälften von zwei Fahrzeugen eine komplette Vorrichtung bilden,
bei fahrendem Fahrzeug im Fahrbetrieb alle erforderlichen Teile in dem Fahrzeug mitgeführt werden,
die Fahrzeugsilhouette durch die Vorrichtung nicht verändert wird und insbesondere
wegen der Radarsignatur und wegen des Schutzaufbaus eine glatte Außenwand am Fahrzeug mit wenig Durchbrüchen angestrebt wird.

Diese Aufgabe wird erfindungsgemäß durch die kennzeichnenden Merkmale des Anspruchs 1 gelöst. Weitere Merkmale ergeben sich aus den Unteransprüchen.

Erfindungsgemäß wird eine Abschleppscherenhälfte als Teil einer Abschleppvorrichtung in einer Lagerrine und -fach im Innenraum des Fahrzeugs untergebracht.

Die Vorteile der Erfindung liegen darin,
dass die Radarsignatur des Fahrzeugs durch die Abschleppvorrichtung nicht verändert wird und
dass die Vorrichtung sicher und geschützt im Innenraum untergebracht ist, so dass auch eine Reinigung und Dekontamination des äusseren Fahrzeugs einfach möglich ist und nicht durch Anbauten aussen behindert wird.

Ausführungsbeispiele der Erfindung sind in den Zeichnungen schematisch dargestellt und werden im folgenden näher beschrieben. Es zeigen:
- Figur 1:: ein Fahrzeug mit Abschleppstange im Transportraum
- Figur 2:: ein Fahrzeug mit entnommener Abschleppstange

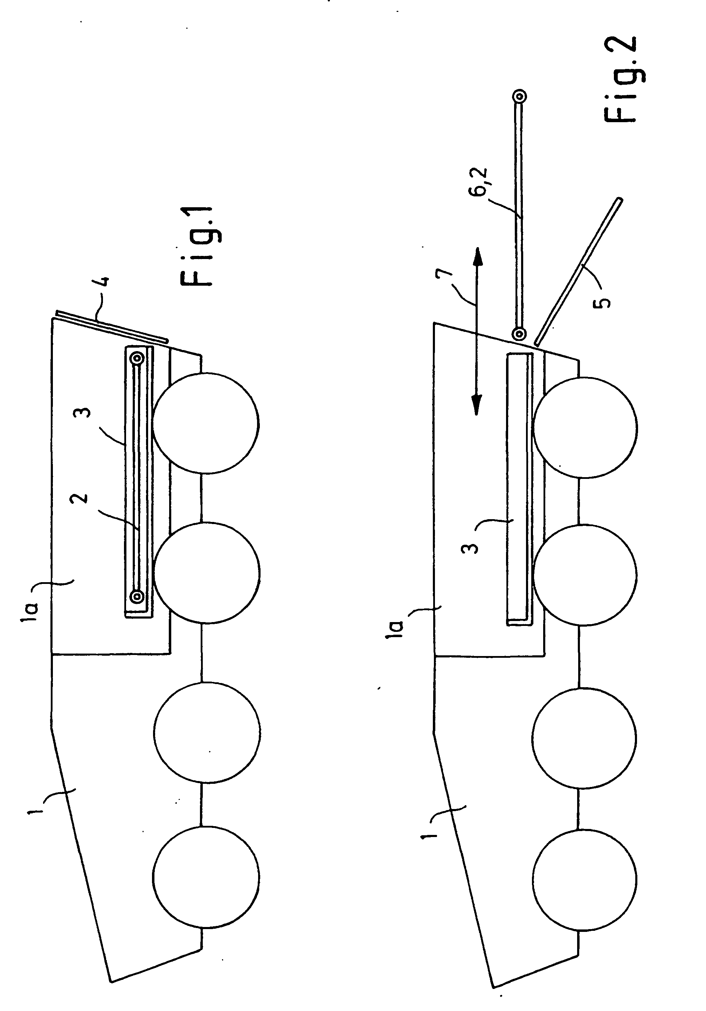

Figur 1 zeigt ein gepanzertes Transportfahrzeug 1 mit einem Transportraum 1a, in dem eine Abschleppstange oder -scherenhälfte 2 in einer Lagerung 3 transportiert wird. Am Heck des Fahrzeugs befindet sich eine Hecktür 4.

In Figur 2 ist die Hecktür 4 in geöffneter Stellung 5 dargestellt. Die Abschleppstange 2 ist in Richtung 7 nach hinten aus der Lagerung 3 herausgezogen zur Position 6. Zur Benutzung der Abschleppeinrichtung wird die Abschleppstange oder -scherenhälfte 2 aus dem Aufbewahrungsbehälter 3 im Fahrzeug entnommen, fallweise mit einer gleichen Hälfte aus einem anderen Fahrzeug, vorzugsweise dem ziehenden Fahrzeug, zur Abschleppschere verbunden und in die an den Fahrzeugen vorhandenen und nicht dargestellten Abschleppösen für den Abschleppvorgang eingehängt.

### Bezugszeichenliste

- 1: Transportfahrzeug
- 1a: Transportraum
- 2: Abschleppstange oder Scherenhälfte
- 3: Lagerung
- 4: Hecktür
- 5: Stellung
- 6: Position
- 7: Richtung

## Patentansprüche

1. Vorrichtung zur Lagerung einer Abschleppvorrichtung mit Abschleppstange oder Abschleppscherenhälfte (2) in einem gepanzerten Transportfahrzeug,
**dadurch gekennzeichnet,**
**dass** sie eine Lagerrinne oder geschlossene Lagerhülse (3) beinhaltet, in welcher die Abschleppvorrichtung transportiert wird, wobei die Lagerrinne/hülse einen Konus beinhaltet, in den die Abschleppstange/scherenhälfte einläuft, und die Lagerrinne/hülse fallweise einen federgedämpften Endanschlag für die Abschleppstange/scherenhälfte an einem Ende besitzt.

2. Vorrichtung nach Anspruch 1, **dadurch gekennzeichnet, dass** über die Länge der Lagerrinne oder - hülse (2) mehrfach gefederte Gleitstücke oder Rollen angebracht sind, die ein reibungsarmes Einschieben und Ausziehen der Abschleppstangen oder -scherenhälfte (2) aus der Lagerrinne oder - hülse gestatten.

3. Vorrichtung nach Anspruch 1 oder 2, **dadurch gekennzeichnet, dass** die Vorspannung der gefederten Rollen per Betätigung aufgehoben oder erhöht werden kann, um eine Zurrung der Abschleppstangen oder -scherenhälften (2) in der Lagerrinne oder -hülse zu erreichen.

4. Vorrichtung nach einem der Ansprüche 1 bis 3, **dadurch gekennzeichnet, dass** die Lagerrinne oder - hülse mittels Montageschienen, wie C-Schienen , am Fahrzeuggehäuse des Transportfahrzeuges lösbar befestigt sind.

## Claims

1. Device for storing a towing device with a tow bar or towing shaft half (2) in an armoured transport vehicle, **characterized in that** it contains a bearing channel or closed bearing sleeve (3) in which the towing device is transported, the bearing channel/sleeve containing a cone into which the tow bar/towing shaft half runs, and the bearing channel/sleeve sometimes has a spring-damped end stop at one end for the tow bar/towing shaft half.

2. Device according to Claim 1, **characterized in that** sliding components or rollers fitted with multiple springs are fitted over the length of the bearing channel or sleeve (2), these sliding components or rollers permitting the tow bars or towing shaft half (2) to be pushed into and drawn out of the bearing channel or bearing sleeve with little friction.

3. Device according to Claim 1 or 2, **characterized in that** the prestressing of the rollers fitted with springs can be cancelled or increased per actuation in order to lash the tow bars or towing shaft halves (2) in the bearing channel or sleeve.

4. Device according to one of Claims 1 to 3, **characterized in that** the bearing channel or sleeve is fastened releasably to the vehicle housing of the transport vehicle by means of installation rails, such as C-rails.

## Revendications

1. Dispositif de stockage d'un dispositif de remorquage avec barre de remorquage ou moitié de ciseaux de remorquage (2) dans un véhicule de transport blindé,
**caractérisé en ce**
**qu'**il contient une cannelure de stockage ou une gaine de stockage fermée (3) dans laquelle le dispositif de remorquage est transporté, la cannelure/gaine de stockage contenant un cône dans lequel converge la barre/moitié de ciseaux de remorquage, et la cannelure/gaine de stockage possède le cas échéant à une extrémité une butée de fin de course amortie par ressort pour la barre/moitié de ciseaux de remorquage.

2. Dispositif selon la revendication 1, **caractérisé en ce que** des segments de rail ou rouleaux à suspension multiple sont montés sur la longueur de la cannelure ou gaine (2) de stockage, lesquels permettent une insertion et un retrait sans frottement des barres ou moitiés de ciseaux de remorquage (2) hors de la cannelure ou de la gaine de stockage.

3. Dispositif selon la revendication 1 ou 2, **caractérisé en ce que** la précontrainte des rouleaux à suspension peut être supprimée ou augmentée pour chaque actionnement, afin d'obtenir un amarrage des barres ou moitiés de ciseaux de remorquage (2) dans la cannelure ou la gaine de stockage.

4. Dispositif selon l'une quelconque des revendications 1 à 3, **caractérisé en ce que** la cannelure ou la gaine de stockage sont fixées de manière détachable au moyen de rails de montage, comme des rails en C, sur le carter du véhicule de transport.
